# EUROPEAN PATENT SPECIFICATION

(11) **EP 2 724 019 B1**
(45) Date of publication and mention of the grant of the patent: **08.04.2015**
(21) Application number: 12748061.4
(22) Date of filing: 31.07.2012
(51) Int. Cl.: F03D 1/00

(54) **CRANE ARRANGEMENT**
KRANANORDNUNG
ASSEMBLAGE DE GRUE

(43) Date of publication of application: 30.04.2014
(73) Proprietor: Mitsubishi Heavy Industries, Ltd., Tokyo 108-8215 (JP)
(72) Inventor: ZAEHR, Matthias, London, Greater London W1K6WL (GB); HILLER, Michael, London, Greater London W1K6WL (GB); DUDEN, Heinrich, London, Greater London W1K6WL (GB)
(74) Representative: RGTH
(86) International application number: PCT/JP2012/004859
(87) International publication number: WO 2014/020637

(56) References cited:
- EP-A1- 2 147 885
- WO-A1-2007/107817
- WO-A2-2009/132671
- WO-A2-2011/064659
- CN-U- 201 901 539
- US-A1- 2012 073 134

## Description

### Technical Field

The disclosure relates to a crane arrangement for a wind turbine generator.

### Background Art

From US 7,789,252 B2 a wind turbine nacelle with an integral service crane for accessing turbine components is known. The service crane described comprises a main crane beam having a track that accommodates a trolley. A hinge is provided at a pivot point near a proximate end of the main beam, such that an aft portion of the main beam extends beyond the pivot point to the exterior of the turbine. A distal end of the main beam rests upon a forward beam. A lateral motion actuator moves the main beam back and forth along the forward beam. The trolley runs back and forth along the main beam. A turbine component is attached to a hook lowered by cable from the trolley. The trolley with the component on the hook is moved to the aft portion of the main beam, which extends beyond the turbine. The hook is lowered to the ground so that the component can be serviced or replaced.

By this means, turbine components can be handled in the nacelle as well as transported from the nacelle to the ground and vice versa; however, the service crane described is not provided for handling and transporting loads, for instance turbine components, disposed in or in the ambience of a rotor head of the wind turbine.

From WO 2011/099134 A1 a method for lifting and lowering equipment within the rotor head of a wind-driven electricity generation device is known, the method enabling the equipment within the rotor head to be lifted and lowered without the use of an external crane. The method for lifting and lowering equipment within the rotor head comprises a step for attaching a temporary winch rail to a rail support section previously provided within the rotor head. In a second step a temporary winch is installed on the temporary winch rail. A third step is comprised for opening a maintenance hatch provided to the rotor head. In a forth step the equipment to be replaced is lifted and lowered by means of the temporary winch. For this purpose, the equipment to be replaced is attached and detached within the rotor head, and the equipment to be replaced is lifted and lowered from an opening for lifting and lowering which is provided in the maintenance hatch.

This arrangement allows for a handling of equipment, that is components, spare parts, tools or the like, within the rotor head of a wind turbine. However, installing and detaching the temporary winch rail and winch as described is a rather expensive work, consuming time and manpower.

WO 2009/132671 A2 discloses a paneling of a nacelle of a wind energy installation comprising a hatch opening.

In WO 2007/107817 A1 a service crane for a wind turbine comprising a crane beam is disclosed.

### Summary of Invention

It is an object of some embodiments of the present invention to design a crane arrangement for a wind turbine generator that avoids the above-mentioned problems and provides a more flexible transporting means for handling equipment, that is components, spare parts, tools or the like, within the rotor head of a wind turbine generator, which transporting means allows for an easier and time- and work-saving operation. This is especially desirable in cases where no direct access from the nacelle to the interior of the hub is possible, so that a crane within a wind turbine nacelle is not applicable for transport use within the rotor head.

This object is achieved by a crane arrangement for a wind turbine generator, which is disposed entirely inside a hub of a wind turbine generator, comprising a supporting frame, a crane member, and a coupling member for movably coupling said crane member to said supporting frame so as to allow a movement of the crane member relative to the supporting frame.

The construction according to some embodiments of the invention allows for an easier and simpler operation of the crane arrangement. Installing and detaching of the crane arrangement, partly or as a whole, can be avoided, thus saving manpower, work time and costs. At the same time, the crane member can be moved more flexibly and can be used independently from a current rotational position of the rotor head. The configuration of the crane arrangement according to some embodiments of the invention thus provides for a simpler and more effective way of lifting and moving components within the rotor head of a wind turbine generator, especially inside the hub.

According to the invention, the crane arrangement is entirely disposed inside the hub of the wind turbine generator. In this way, the construction of the rotor head of the wind turbine generator is not or only minimally affected by providing the crane arrangement. Particularly, no changes are required of the construction of a spinner as a housing for the hub of the rotor head, and the crane arrangement is completely weather protected by said spinner.

In a preferred embodiment of the invention, the supporting frame is disposed in the region of a rotational axis of the hub of the wind turbine generator. This allows for a central positioning of the supporting frame within the hub regardless of the actual rotational position of the hub. As a result, at least nearly the same movements and handling operations of the crane member in different rotational positions of the hub are achieved and thus a flexible use of the crane arrangement is enabled.

In the crane arrangement according to a further embodiment of the invention, the supporting frame is fixedly attached to the hub or to a main shaft of the wind turbine generator or to a rotor bearing of the wind turbine generator and is rotatable together with the hub or the main shaft respectively.

Preferably, by this embodiment measures are provided for mounting the supporting frame and therefore the crane arrangement to wind turbine rotor heads of different constructional kinds. In some of these constructions, the supporting frame is mounted directly to the hub. In other embodiments where a main shaft is provided in the wind turbine generator, the support frame advantageously may be directly mounted to the main shaft. If the wind turbine generator comprises a main shaft and the hub is mounted to said main shaft, then preferably the supporting frame is mounted to an end of said main shaft turned towards the hub. In an embodiment comprising rotor bearings of different constructional types, the supporting frame may be preferably mounted to a portion of a rotor bearing turned towards the hub.

In another embodiment of the invention, the coupling member is adapted to allow for a movement of the crane member in three degrees of freedom. It is in particular preferred if the coupling member allows for the crane member to rotate around all three Cartesian axes. This embodiment further increases the flexibility of the handling of the crane arrangement in any rotational position of the rotor head.

According to another embodiment of the invention, the coupling member is formed as a pivot and in particular as a ball joint. This allows for a simple, rigid and flexibly movable construction of the coupling member and therefore enables a very comfortable actuation of the crane member.

In order to further increase the usefulness of the crane arrangement, in another embodiment the crane member comprises an elongate arm member, in particular a beam. This allows for a simple, light-weight, rigid and space-saving construction of the crane member. A crane member having these characteristics can easily and cheaply be produced, is practical in use and does not have any noticeable impact on the operation of the wind turbine generator; especially, it does not cause any noticeable balance error that might have an impact on the rotation of the rotor head.

Preferably, the crane arrangement comprises an actuation member for moving the crane member. This allows for a precisely defined and safe movement of the crane member. In the crane arrangement according to another embodiment of the invention, the actuation member comprises hoisting means, in particular a winch or a hoist, and a rope-like element, wherein a first end of the rope-like element is fixed to a fixing point on the crane member, and wherein a second end of the rope-like element is attached to the hoisting means and controlled by the hoisting means in order to move the crane member to a desired position.

Said rope-like element can be formed from various kinds of construction elements, such as ropes, chains, belts, wires, cables, wire cables, cords or the like. Though flexible elements are particularly advantageous and therefore preferred, in further embodiments rods or bars may be used for at least a portion of the rope-like element as well.

Further, a hoisting means may be formed by any arrangement capable of hoisting a rope-like element of the kind described beforehand. This may for instance be a hoist, a winch, a pulley block, a chain block, and the hoisting means may be motor-powered, for example by an electric motor, or manually operated.

According to another embodiment of the invention, the actuation member is adapted to be installed in different positions within the hub according to a desired movement of the crane member or according to a certain hub position. For instance if the actuation member comprises hoisting means, especially a hoist or winch to actuate the crane member by means of a rope-like element, for instance a rope, in order to allow for a precise, safe and comfortable actuation of the crane member during operation of the crane arrangement the actuation member should be installed in a position at least substantially above the crane member in a vertical direction. This especially holds for every rotational position which the rotor head and thus the hub can take in case the crane arrangement is used. Therefore, adapting the actuation member to be installed in different positions within the hub allows for a variable actuation of the crane member and thus augments the serviceability of the crane arrangement.

In the actuation member for the crane arrangement according to some embodiments of the present invention, at least one deflection member is provided, the at least one deflection member being attached to the hub for deflecting the path of the rope-like element between the fixing point on the crane member and the hoisting means. Such a deflection member may preferably comprise a block or a roller around which the rope-like element is wound or guided, respectively. In this manner, an increased flexibility is achieved for the positioning of the hoisting means. Advantageously, the use of one or more deflection members allows for a positioning of the hoisting means outside the hub or the rotor head, respectively, for example a positioning in the nacelle. Space and weight may thus be saved in the rotor head.

According to another embodiment of the invention, an attachment member is disposed on the crane member for attaching a load, preferably a component or a spare part of the hub, to the crane member for transportation of said load by the crane arrangement. This allows for a simple and safe handling of said load by means of the crane member. Preferably, the attachment member comprises at least one hook means as an advantageously variable embodiment of an attachment member of the kind described, such an attachment member being appropriate for different loads to be handled.

In another embodiment, the attachment member comprises a chain block. The attachment member may thus be formed similar or equal to the hoisting means or may comprise portions similar to respective portions of said hoisting means, allowing for a unification of construction parts of the crane arrangement.

Preferably, the attachment member is disposed at a distal end of the crane member, opposite to a proximate end of the crane member at which proximate end the crane member is coupled to said supporting frame by means of said coupling member.

In another embodiment, a plurality of attachment members is provided at different positions at the crane member. This allows for an increased flexibility of handling different loads at different positions within the reach of the crane member, and thus increases the serviceability of the crane arrangement.

In still another embodiment, the attachment member is movably attached to the crane member in order to be movable in different positions along the crane member. Such, only one attachment member is needed for achieving the flexibility of a crane arrangement comprising a plurality of attachment members fixedly located at different positions at the crane member. This, again, increases the serviceability of the crane arrangement.

According to another embodiment of the present invention, the crane member comprises an extension member, in particular an extension beam, said extension member being coupled to the distal end of the crane member in order to extend the reach of the crane member. The extension member can be coupled to the distal end of the crane member in different ways. In one embodiment, the extension member may be coupled to the crane member by a pivot, a knuckle or a hinge. In a more preferable embodiment, the coupling is performed by a linear version of a journal or by a plane bearing. Most preferable, the extension member is arranged to be gradually or continuously extendable. Preferably in context with the embodiment in which the crane member comprises an elongate arm member and in particular a beam, the extension member is arranged to be telescopically extendable, that is, the coupling is achieved by a form of a telescopic bearing. This allows for a simple, rigid and flexible construction that is well adapted for transmission of forces impacted on the crane member during operation of the crane arrangement, is easily adjustable and is lockable.

Such, the reach or radius, respectively, of the crane member can be additionally increased and especially made variable in a manner appropriate to the current need of the respective transporting action to be carried out.

In a further embodiment of the invention, the extension member is arranged to project through an opening of the hub for transporting a load from inside the hub to the outside of the hub or vice versa. Especially, the extension member is arranged to project through a front opening of the hub, which front opening is adapted for ventilating air into the interior of the hub preferably during operation of the wind turbine generator. In this manner, the front opening is used for various purposes, and there is no need for a separate opening for maintenance purposes, and furthermore, the transport of the load is easily performed by a simple arrangement, thus simplifying the overall construction of the wind turbine generator.

According to another embodiment of the invention, advantageously a security arrangement is provided for securing the crane member in a fixed position relative to the hub. By this means it is ensured that the crane member remains in a fixed and secure position, which is a parking position, during operation of the wind turbine generator, when the rotor head together with the crane arrangement is rotating around the rotational axis of the hub. This prevents the crane arrangement, the hub and, what is more, the rotor head of the wind turbine as a whole from severe damage.

In another embodiment of the invention, a sensor arrangement is provided for monitoring the fixed position of the crane member relative to the hub. A sensor in this context may be an electric or electronic sensor, preferably a switch that is actuated when the crane member is secured in the fixed position by the security arrangement, the switch activating or deactivating, respectively, a control signal that may be further processed by a control means in order to provide control information about the operational state of the wind turbine generator and its components, preferably in context with other control information concerning other operational parameters of the wind turbine generator to be monitored.

In a variation of this embodiment, the sensor may be combined with said security arrangement described beforehand, thus directly controlling and monitoring the correct function of the security arrangement in combination with monitoring the correct position of the crane member, that is the correct keeping of the defined parking position of the crane member. The sensor further may comprise an electronic switch using a magnetic sensor or an approximation sensor, which provides for a more rigid and reliable construction in view of corrosion influences that may increasingly occur especially in offshore use of wind turbine generators.

In another variation of the embodiment described beforehand, said sensor may comprise a mechanical sensor, preferably a mechanical position sensor, and mechanical control and monitoring means like, for instance, locks and mechanical warning devices.

By means of the embodiments described beforehand easy monitoring and controlling of the correct, definite and reliable function of the security arrangement is possible.

### Brief Description of Drawings

Embodiments of the invention will be described below with reference to the following figures which show in schematic representation:

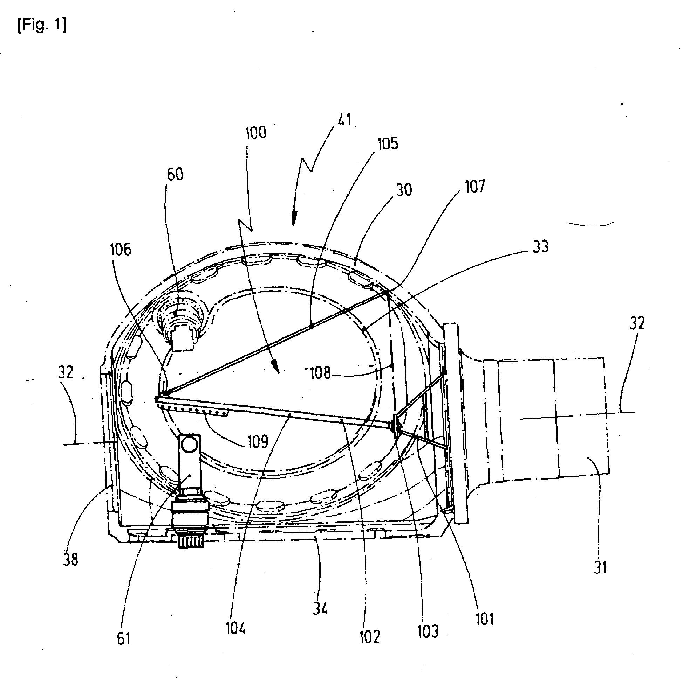

[fig.1]Figure 1 is a first, vertical longitudinal cross-section of an embodiment of a centre portion of a rotor head of a wind turbine generator, seen in a first viewing direction as a side view perpendicular to the section plane of said first, vertical longitudinal cross-section; the centre portion of the rotor head of the wind turbine generator including a hub and an embodiment of a crane arrangement;

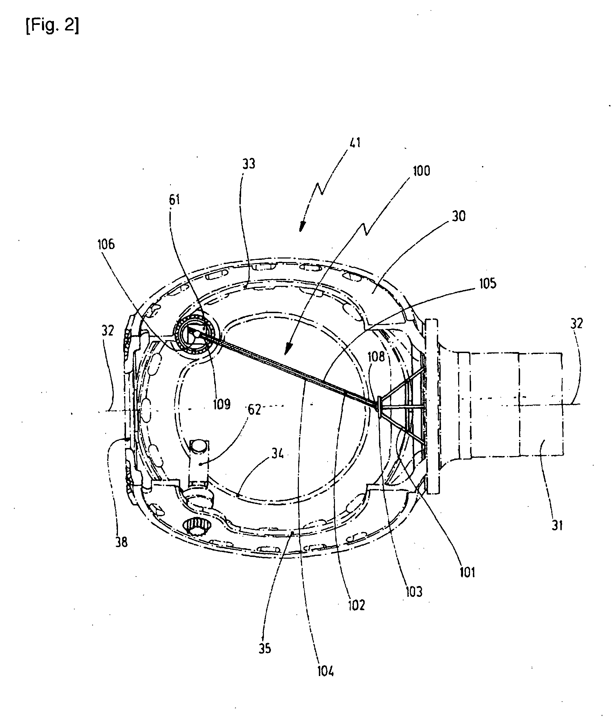

[fig.2]Figure 2 is a second, horizontal longitudinal cross-section of the embodiment of a centre portion of a rotor head of a wind turbine generator according to Figure 1, seen in a second viewing direction as a top view along said section plane of said first, vertical longitudinal cross-section, that is perpendicular to said second, horizontal longitudinal cross-section;

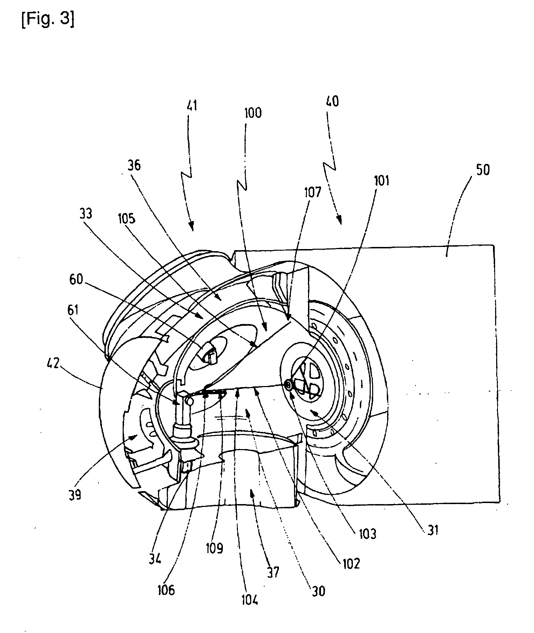

[fig.3]Figure 3 is a perspective view of said first, vertical longitudinal cross-section of the embodiment of a centre portion of a rotor head of a wind turbine generator shown in Figures 1 and 2, seen in a third viewing direction relative to said section plane of said first, vertical longitudinal cross-section and to said section plane of said second, horizontal longitudinal cross-section partly from the front side, partly from the top; and

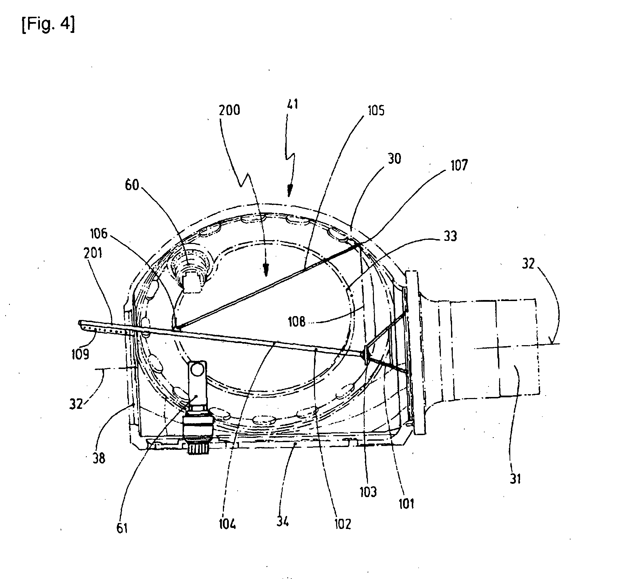

[fig.4]Figure 4 is a first, vertical longitudinal cross-section of a variation of the embodiment of a centre portion of a rotor head of a wind turbine generator, seen in the first viewing direction as a side view perpendicular to the section plane of said first, vertical longitudinal cross-section; the centre portion of the rotor head of the wind turbine generator including a hub and another embodiment of a crane arrangement.

### Description of Embodiments

Figure 1 in a schematic view shows a first, vertical longitudinal cross-section of an embodiment of a centre portion of a rotor or a rotor head 41, respectively, of a wind turbine generator 40, seen in a first viewing direction as a side view perpendicular to the section plane of said first, vertical longitudinal cross-section. The centre portion of the rotor head 41 of the wind turbine generator 40 comprises a hub 30 mounted to a generator shaft 31 of the wind turbine generator 40. In the embodiment shown, the generator shaft 31 is formed as a sleeve shaft; however, various other forms are possible as well. The hub 30 is rotatable around a rotation axis 32 that is identical with a rotation axis of the generator shaft 31, the rotation axis 32 being longitudinally located in the centre of the generator shaft 31. The wind turbine generator 40 and its construction parts as far as they are of importance in context with the described embodiments of the present invention will be discussed hereinafter in more detail in context with Figure 1 and the further Figures of the drawings.

The hub 30 in the embodiment as shown in the figures comprises three bearings 33, 34, 35, respectively, adapted for mounting rotor blades to the hub 30, a first one of these bearings denoted by reference numeral 33 and a second one of these bearings denoted by reference numeral 34 being visible in Figure 1, a third one of these bearings denoted by reference numeral 35 being shown in Figure 2. To these bearings 33, 34, 35, respectively, rotor blades are mounted, root portions of which rotor blades are schematically shown in Figure 3 for a first one of these rotor blades denoted by reference numeral 36 and mounted to said first bearing 33, and a second one of these rotor blades denoted by reference numeral 37 and mounted to said second bearing 34.

For varying and controlling the pitch of the rotor blades 36, 37 (and the third one not shown), pitch drive motors are provided, one for each rotor blade. The pitch drive motors are mounted to the bearings 33, 34, 35, respectively, for the rotor blades 36, 37 (and the third one not shown), respectively, inside the hub 30. In Figure 1, a first one of the pitch drive motors provided for the first rotor blade 36 is shown and denoted by reference numeral 60, and a second one of the pitch drive motors provided for the second rotor blade 37 is shown and denoted by reference numeral 61. In Figure 2, a third one of the pitch drive motors provided for the third rotor blade is shown and denoted by reference numeral 62.

As shown in Figure 1, a crane arrangement 100 is comprised inside the hub 30. In some embodiments, the crane arrangement 30 comprises a supporting frame 101, a crane member 102 and a coupling member 103 for movably coupling said crane member 102 to said supporting frame 101 so as to allow for a movement of the crane member 102 relative to the supporting frame 101.

In this embodiment, the supporting frame 101 is preferably made from profiled metal, for example steel, aluminum or an aluminum alloy, respectively, but may also formed from another appropriate material. The supporting frame 101 is disposed in the region of the rotational axis 32 of the hub 30 of the wind turbine generator 40. Preferably, the supporting frame is fixedly attached to a front side of the generator shaft 31 where the generator shaft 31 and the hub 30 are connected to each other. In other embodiments of the wind turbine generator 40 where a generator shaft of the kind shown in Figure 1 is not available, another fixing of the supporting frame 101 within the rotor head is used, for instance a fixing to a main shaft of the wind turbine generator 40 or to a rotor head bearing of the wind turbine generator 40. As a main feature of the supporting frame 101, it is rotatable together with the hub 30, the generator shaft 31, a main shaft or the like, respectively.

The coupling member 103 in this embodiment of the present invention is formed as a pivot and in particular as a ball joint. This is a simple and rigid construction that allows for a movement of the crane member 102 in three degrees of freedom so as to be adapted to reach every portion of the interior of the hub 30.

The crane member 102 comprises an elongate arm member 104, in particular a beam. Such, the crane member 103 is advantageously made from a profiled metal, especially steel, aluminum or an aluminum alloy, respectively, but may also formed from another appropriate material. Preferably, the elongate arm member 104 of the crane member 102 is made by means of a substantially tubular member, that is for instance a tube or an elongate member made from a sheet metal or the like bended in at least nearly tubular shape.

The crane arrangement 102 comprises an actuation member 105 for moving the crane member 102 to a position where a load to be handled and transported has to be picked up and lifted or lowered, respectively. In Figure 1, the actuation member 105 is drawn schematically as an elongate member extending between a first fixing point 106 on the crane member 102, that is the elongate arm member 104, on the one hand, and a second fixing point shown in a position 107 within the hub 30. The second fixing point in position 107 may be a hook-like means, preferably located on the inside of a wall of the hub 30.

The actuation member 105 is adapted to be installed in different positions within the hub according to a desired movement of the crane member 102 or according to a certain position of the hub 30. Especially, this means that besides said second fixing point shown in position 107 further second fixing points are provided. As in a preferred embodiment an operation of the crane arrangement will only take place when the hub 30 and thus the rotor head 41 is in a definite rotational position, only a few second fixing points within the hub are necessary. If, for instance, an operation of the crane arrangement 100 is only intended in a Y-shape position of the rotor blades, in a hub 30 for three rotor blades as described in total only three second fixing points are necessary. These second fixing points are arranged in such a manner that in each one of the definite rotational positions of the rotor head 41 in which an operation of the crane arrangement 100 takes place the respective second fixing point is located at least nearly vertically above the coupling member 103. This allows for a controlled swivelling or pivoting, respectively, of the crane member 102 around a swivelling axis 108 leading from the coupling member 103 to the respective second fixing point.

Though not shown in detail in the figures, preferably the actuation member 105 comprises hoisting means, in particular a winch or a hoist, and a rope-like element, the latter being symbolized in Figure 1 by the way the actuation member 105 is drawn as an elongate member. As shown in Figure 1, a first end of the rope-like element is fixed to the first fixing point 106 on the crane member 102. In this embodiment, a second end of the rope-like element is attached to the hoisting means instead of directly being attached to one of the second fixing points, for instance in position 107. In the situation of Figure 1, the hoist or winch not shown in detail will be advantageously attached to the second fixing point in position 107. The rope-like element is then controlled by the hoisting means, that is the winch or hoist attached to the second fixing point in position 107 of Figure 1, in order to move the crane member 102 to a desired position.

Instead of directly attaching one end of the actuation member 105 to the respective second fixing point, for instance in position 107, at least one deflection member is attached to the hub 30, preferably at the second fixing points, for deflecting the path of the rope-like element between the first fixing point 106 on the crane member and the hoisting means. The hoisting means to which the other end of the rope-like element is attached can thus be located conveniently at various locations within the hub 30, but also outside the hub 30. his allows for an increase of freedom of the design of the crane arrangement 100.

Advantageously, an attachment member 109 is disposed on the crane member 102 for attaching a load, preferably a component or a spare part of the hub, to the crane member 102 for transportation of said load by the crane arrangement 100. As an example of such a load, the second pitch drive motor 61 is shown in Figure 1; however, the other pitch drive motors 60, 62 can be transported by the crane arrangement 100 as well, for which purpose the hub is preferably rotated into a position in which the pitch drive motor in concern is located at the downward side of the hub 30 like the second pitch drive motor 61 in the situation shown in Figure 1.

Though not shown explicitly in Figure 1, the attachment member 109 preferably comprises at least one hook means, especially a crane hook, to which the intended load can be attached. For more flexibility in operation of the crane arrangement 100, a plurality of attachment members can advantageously be provided at different positions at the crane member 102. In Figure 1, this is represented by a strip or bar fixed to the crane member 102 in the region of the distal end thereof, the strip or bar having a row of holes for attaching a hook means, especially a crane hook, to an appropriate one of these holes. By this means, loads can be comfortably handled at various locations.

In an advantageously improved embodiment of the arrangement described in the foregoing, the attachment member 109 is movably attached to the crane member 102 in order to be movable in different positions along the crane member 102. Attaching of the attachment member 109 to the crane member 102 may be preferably achieved by means of a slide or the like.

In Figure 2, where a second, horizontal longitudinal cross-section of the embodiment of a centre portion of a rotor head 41 of a wind turbine generator 40 according to Figure 1 is shown, seen in a second viewing direction as a top view along said section plane of said first, vertical longitudinal cross-section, that is perpendicular to said second, horizontal longitudinal cross-section, construction elements that have been described in the foregoing are again denoted by identical reference numerals. In this Figure, the crane member 102 is shown in a position where the distal end provided with the attachment member is located directly above the second pitch drive motor 61 for handling, that is lifting and transporting, this second pitch drive motor 61 for the purpose of maintenance, for example. Further, it is shown that the actuation member is exactly aligned vertically above the crane member 102 and that the swivelling axis 108 is leading directly vertically.

A perspective view of said first, vertical longitudinal cross-section of the embodiment of the centre portion of the rotor head 41 of the wind turbine generator 40 is shown in Figure 3. This perspective view is seen in a third viewing direction relative to said section plane of said first, vertical longitudinal cross-section and to said section plane of said second, horizontal longitudinal cross-section partly from the front side, partly from the top of the wind turbine generator 40. Again, the same elements as already described beforehand are denoted by identical reference numerals.

In Figure 3, additionally to Figures 1 and 2, further portions of the wind turbine generator 40 are shown. The rotor head 41 is connected to a nacelle 50 comprising the electricity generating means, that is generator and electric or electronic control devices adapted for converting the rotational energy provided by the operation of the rotor, that is the rotor head 41 and the rotor blades, into electric energy. These portions are omitted as not being of importance for the description of the invention.

From Figure 3 it can be seen that the hub 30 is surrounded by a spinner 42, the spinner 42 forming a housing for the hub 30 and the bearings 33, 34, 35 for the rotor blades. At its front portion and centrally arranged with respect to the rotation axis 32 of the hub 30 and the generator shaft 31, a front opening 43 for ventilation purposes is provided, by which front opening 43 air can be led into the inside of the hub 30 and the nacelle 50. To this purpose, the hub 30 is provided with a front opening 38 as well, and between the two front openings 38, 43 an air duct is installed to lead a stream of cooling air into the hub 30. The front opening 38 of the hub 30 is shown in Figures 1 and 2 as well.

The air duct mentioned leading from the front opening 43 of the spinner 42 to the front opening 38 of the hub 30 is not shown for the sake of clarity of the drawings. However, in the air duct a filter-ventilator unit 39 is provided for driving the stream of cooling air and filtering moisture and dirt from the air in order to protect the wind turbine generator 40 from weather influences.

In Figure 3, the crane member 102 is shown in the same position as in Figure 1.

In Figure 4, where identical elements are again denoted by the same reference numerals as in the foregoing figures and description, a first, vertical longitudinal cross-section of a variation of the embodiment of the centre portion of the rotor head 41 of the wind turbine generator 40, seen in the first viewing direction as a side view perpendicular to the section plane of said first, vertical longitudinal cross-section, is shown. The centre portion of the rotor head 41 of the wind turbine generator 40 now includes, besides the hub 30, a crane arrangement according to another embodiment of the invention denoted by reference numeral 200.

In the crane arrangement 200 according to Figure 4, the crane member 102 comprises an extension member 201, in particular an extension beam, said extension member 201 being coupled to a distal end of the crane member 102 in order to extend the reach of the crane member 102.

Advantageously, the extension member 201 is arranged to be gradually or continuously extendable, in particular the extension member 201 is arranged to be telescopically extendable. This is shown in the drawing.

Figure 4 further shows that the extension member 201 is arranged to project through the front opening 38 of the hub 30 for transporting a load, for instance a pitch drive motor for the purpose of maintenance, outside the hub 30.

Though not shown explicitly in the figures, a security arrangement is advantageously provided for securing the crane member 102 in a fixed position relative to the hub 30. Especially, such a security arrangement is mounted at the inside of the hub 30 close to its wall, so that a light-weight, space-saving, simple and rigid construction for the security arrangement is achieved. Preferably, the crane arrangement 100 or 200, respectively, is secured to and by this security arrangement at the distal end of the crane member 102 close to the wall of the hub 30 at its inside.

Further, a sensor arrangement is provided for monitoring the fixed position of the crane member 102 relative to the hub 30. Thus, the secure position of the crane arrangement 100 or 200, respectively, is comfortably monitored from outside the hub, preferably from outside the wind turbine generator 40 by means of a remote control arrangement, by which other operational parameters of the wind turbine generator are monitored as well. Such a sensor arrangement is advantageously provided with electric or electronic switches or an approximation sensor.

## Claims

1. A crane arrangement (100) and hub (30) for a wind turbine generator (40), comprising
a supporting frame (101),
a crane member (102), and
a coupling member (103) for movably coupling said crane member (102) to said supporting (101) frame so as to allow a movement of the crane member (102) relative to the supporting frame (101), **characterized in that** the crane arrangement (100) is entirely disposed inside the hub (30) of the wind turbine generator (40).

2. The crane arrangement (100) according to claim 1,
wherein the supporting frame (101) is disposed in the region of a rotational axis of the hub (30) of the wind turbine generator (40).

3. The crane arrangement (100) according to claim 2,
wherein the supporting frame (101) is fixedly attached to the hub (30) or to a main shaft of the wind turbine generator (40) or to a rotor bearing of the wind turbine generator (40) and is rotatable together with the hub (30) or the main shaft respectively.

4. The crane arrangement (100) according to claim 1,
wherein the coupling member (103) is adapted to allow for a movement of the crane member (102) in three degrees of freedom.

5. The crane arrangement (100) according to claim 1,
wherein the coupling member (103) is formed as a pivot and in particular as a ball joint.

6. The crane arrangement (100) according to claim 1,
wherein the crane member (102) comprises an elongate arm member (104), in particular a beam.

7. The crane arrangement (100) according to claim 1,
wherein the crane arrangement (100) comprises an actuation member (105) for moving the crane member (102).

8. The crane arrangement (100) according to claim 7,
wherein the actuation member (105) comprises hoisting means, in particular a winch or a hoist, and a rope-like element,
wherein a first end of the rope-like element is fixed to a fixing point (106) on the crane member (102), and
wherein a second end of the rope-like element is attached to the hoisting means and controlled by the hoisting means in order to move the crane member (102) to a desired position.

9. The crane arrangement (100) according to claim 7,
wherein the actuation member (105) is adapted to be installed in different positions within the hub (30) according to a desired movement of the crane member (102) or according to a certain hub position.

10. The crane arrangement (100) according to claim 8,
wherein at least one deflection member is attached to the hub (30) for deflecting the path of the rope-like element between the fixing point (106) on the crane member (102) and the hoisting means.

11. The crane arrangement (100) according to claim 1,
wherein an attachment member (109) is disposed on the crane member (102) for attaching a load, preferably a component or a spare part of the hub (30), to the crane member (102) for transportation of said load by the crane arrangement (100).

12. The crane arrangement (100) according to claim 11,
wherein the attachment member (109) comprises at least one hook means.

13. The crane arrangement (100) according to claim 11,
wherein a plurality of attachment members (109) is provided at different positions at the crane member (102).

14. The crane arrangement (100) according to claim 11,
wherein the attachment member (109) is movably attached to the crane member (102) in order to be movable in different positions along the crane member (102).

15. The crane arrangement (100) according to claim 1,
wherein the crane member (102) comprises an extension member (201), in particular an extension beam, said extension member (201) being coupled to a distal end of the crane member (102) in order to extend the reach of the crane member (102).

16. The crane arrangement (100) according to claim 15,
wherein the extension member (201) is arranged to be gradually or continuously extendable, in particular the extension member (201) is arranged to be telescopically extendable.

17. The crane arrangement (100) according to claim 15,
wherein the extension member (201) is arranged to project through an opening (38) of the hub (30) for transporting a load outside the hub (30).

18. The crane arrangement (100) according to claim 1,
wherein a security arrangement is provided for securing the crane member (102) in a fixed position relative to the hub (30).

19. The crane arrangement (100) according to claim 18,
wherein a sensor arrangement is provided for monitoring the fixed position of the crane member (102) relative to the hub (30).

## Patentansprüche

1. Krananordnung (100) und Nabe (30) für einen Windturbinengenerator (40), umfassend:
ein Trägergerüst (101),
ein Kranelement (102), und
ein Kopplungselement (103) für eine bewegliche Kopplung des Kranelements (102) mit dem Trägergerüst (101), um eine Bewegung des Kranelements (102) relativ zu dem Trägergerüst (101) zu ermöglichen, **dadurch gekennzeichnet, dass** die Krananordnung (100) gänzlich innerhalb der Nabe (30) des Windturbinengenerators (40) angeordnet ist.

2. Krananordnung (100) nach Anspruch 1,
wobei das Trägergerüst (101) in dem Bereich einer Drehachse der Nabe (30) des Windturbinengenerators (40) angeordnet ist.

3. Krananordnung (100) nach Anspruch 2,
wobei das Trägergerüst (101) an der Nabe (30) oder an einer Hauptwelle des Windturbinengenerators (40) oder an einem Rotorlager des Windturbinengenerators (40) fest befestigt ist und wobei es zusammen mit der Nabe (30) bzw. der Hauptwelle drehbar ist.

4. Krananordnung (100) nach Anspruch 1,
wobei das Kopplungselement (103) dafür ausgelegt ist, eine Bewegung des Kranelements (102) in drei Freiheitsgraden zu ermöglichen.

5. Krananordnung (100) nach Anspruch 1,
wobei das Kopplungselement (103) als ein Gelenk- und insbesondere als ein Kugelgelenk gebildet ist.

6. Krananordnung (100) nach Anspruch 1,
wobei das Kranelement (102) ein langgestrecktes Armelement (104), insbesondere einen Auslegerarmbalken, umfasst.

7. Krananordnung (100) nach Anspruch 1,
wobei die Krananordnung (100) ein Betätigungselement (105) umfasst, um das Kranelement (102) zu bewegen.

8. Krananordnung (100) nach Anspruch 7,
wobei das Betätigungselement (105) Hebemittel, insbesondere eine Winde oder eine Hebevorrichtung, und ein seilähnliches Element umfasst,
wobei ein erstes Ende des seilähnlichen Elements an einem festen Punkt (106) auf dem Kranelement (102) befestigt ist, und
wobei ein zweites Ende des seilähnlichen Elements an den Hebemitteln befestigt und von den Hebemitteln gesteuert wird, um das Kranelement (102) zu einer gewünschten Position zu bewegen.

9. Krananordnung (100) nach Anspruch 7,
wobei das Betätigungselement (105) dafür ausgelegt ist, in verschiedenen Positionen innerhalb der Nabe (30) entsprechend einer gewünschten Bewegung des Kranelements (102) oder entsprechend einer bestimmten Nabenposition installiert zu werden.

10. Krananordnung (100) nach Anspruch 8,
wobei mindestens ein Umlenkungselement an der Nabe (30) befestigt ist, um den Weg des seilähnlichen Elements zwischen dem Befestigungspunkt (106) auf dem Kranelement (102) und den Hebemitteln umzulenken.

11. Krananordnung (100) nach Anspruch 1,
wobei ein Befestigungselement (109) auf dem Kranelement (102) angeordnet ist, um eine Last, vorzugsweise eine Komponente oder ein Ersatzteil der Nabe (30), an dem Kranelement (102) für einen Transport der Last durch die Krananordnung (100) zu befestigen.

12. Krananordnung (100) nach Anspruch 11,
wobei das Befestigungselement (109) mindestens ein Hakenmittel umfasst.

13. Krananordnung (100) nach Anspruch 11,
wobei mehrere Befestigungselemente (109) an verschiedenen Positionen des Kranelements (102) bereitgestellt sind.

14. Krananordnung (100) nach Anspruch 11,
wobei das Befestigungselement (109) an dem Kranelement (102) beweglich befestigt ist, um entlang des Kranelements (102) zu verschiedenen Positionen hin beweglich zu sein.

15. Krananordnung (100) nach Anspruch 1,
wobei das Kranelement (102) ein Verlängerungselement (201), insbesondere einen Verlängerungsauslegerarm, umfasst, wobei das Verlängerungselement (201) an ein distales Ende des Kranelements (102) gekoppelt ist, um die Reichweite des Kranelements (102) zu verlängern.

16. Krananordnung (100) nach Anspruch 15,
wobei das Verlängerungselement (201) angeordnet ist, um stufenförmig oder kontinuierlich verlängerbar zu sein, insbesondere ist das Verlängerungselement (201) angeordnet, um teleskopisch verlängerbar zu sein.

17. Krananordnung (100) nach Anspruch 15,
wobei das Verlängerungselement (201) angeordnet ist, um durch eine Öffnung (38) der Nabe (30) überzustehen, um eine Last außerhalb der Nabe (30) zu transportieren.

18. Krananordnung (100) nach Anspruch 1,
wobei eine Sicherungsanordnung bereitgestellt ist, um das Kranelement (102) in einer festen Position relativ zu der Nabe (30) sicher zu befestigen.

19. Krananordnung (100) nach Anspruch 18,
wobei eine Sensoranordnung bereitgestellt ist, um die feste Position des Kranelements (102) relativ zu der Nabe (30) zu überwachen.

## Revendications

1. Agencement de grue (100) et de moyeu (30) pour un générateur de turbine éolienne (40), comprenant
un cadre de support (101),
un élément de grue (102), et
un élément d'accouplement (103) pour accoupler de manière mobile ledit élément de grue (102) audit cadre de support (101) de manière à permettre un mouvement de l'élément de grue (102) par rapport au cadre de support (101), **caractérisé en ce que** l'agencement de grue (100) est entièrement disposé à l'intérieur du moyeu (30) du générateur de turbine éolienne (40).

2. Agencement de grue (100) selon la revendication 1,
dans lequel le cadre de support (101) est disposé dans la zone d'un axe de rotation du moyeu (30) du générateur de turbine éolienne (40).

3. Agencement de grue (100) selon la revendication 2,
dans lequel le cadre de support (101) est attaché de manière fixe au moyeu (30) ou à un arbre principal du générateur de turbine éolienne (40) ou à un palier de rotor du générateur de turbine éolienne (40) et peut respectivement tourner ensemble avec le moyeu (30) ou l'arbre principal.

4. Agencement de grue (100) selon la revendication 1,
dans lequel l'élément d'accouplement (103) est adapté pour permettre un mouvement à trois degrés de liberté de l'élément de grue (102).

5. Agencement de grue (100) selon la revendication 1,
dans lequel l'élément d'accouplement (103) est formé en tant que pivot, et en particulier en tant que joint à rotule.

6. Agencement de grue (100) selon la revendication 1,
dans lequel l'élément de grue (102) comprend un élément de bras allongé (104), en particulier une flèche.

7. Agencement de grue (100) selon la revendication 1,
dans lequel l'agencement de grue (100) comprend un élément d'actionnement (105) pour faire bouger l'élément de grue (102).

8. Agencement de grue (100) selon la revendication 7,
dans lequel l'élément d'actionnement (105) comprend un moyen de levage, en particulier un treuil de halage ou un engin de levage, et un élément semblable à une corde,
dans lequel une première extrémité de l'élément seblable à une corde est fixée à un point de fixation (106) sur l'élément de grue (102), et
dans lequel une seconde extrémité de l'élément semblable à une corde est attachée au moyen de levage et est contrôlée par le moyen de levage afin de faire bouger l'élément de grue (102) vers une position souhaitée.

9. Agencement de grue (100) selon la revendication 7,
dans lequel l'élément d'actionnement (105) est adapté pour être installé dans différentes positions à l'intérieur du moyeu (30) en fonction d'un mouvement souhaité de l'élément de grue (102) ou en fonction d'une certaine position du moyeu.

10. Agencement de grue (100) selon la revendication 8,
dans lequel au moins un élément de déflexion est attaché au moyeu (30) pour défléchir le trajet de l'élément semblable à une corde entre le point de fixation (106) sur l'élément de grue (102) et le moyen de levage.

11. Agencement de grue (100) selon la revendication 1,
dans lequel un élément d'attachement (109) est disposé sur l'élément de grue (102) pour attacher une charge, de préférence un composant ou une pièce détachée du moyeu (30), à l'élément de grue (102), afin de transporter ladite charge grâce à l'agencement de grue (100).

12. Agencement de grue (100) selon la revendication 11,
dans lequel l'élément d'attachement (109) comprend au moins un moyen de crochet.

13. Agencement de grue (100) selon la revendication 11,
dans lequel une pluralité d'éléments d'attachement (109) est fournie dans différentes positions sur l'élément de grue (102).

14. Agencement de grue (100) selon la revendication 11,
dans lequel l'élément d'attachement (109) est attaché de manière mobile à l'élément de grue (102) afin d'être mobile dans différentes positions le long de l'élément de grue (102).

15. Agencement de grue (100) selon la revendication 1,
dans lequel l'élément de grue (102) comprend un élément d'allongement (201), en particulier une flèche d'allongement, ledit élément d'allongement (201) étant accouplé à une extrémité distale de l'élément de grue (102) afin d'allonger l'étendue de l'élément de grue (102).

16. Agencement de grue (100) selon la revendication 15,
dans lequel l'élément d'allongement (201) est étudié de manière à pouvoir s'allonger progressivement ou en continu, l'élément d'allongement (201) étant en particulier étudié de manière à pouvoir s'allonger de façon télescopique.

17. Agencement de grue (100) selon la revendication 15,
dans lequel l'élément d'allongement (201) est étudié pour se projeter à travers une ouverture (38) du moyeu (30) afin de transporter une charge à l'extérieur du moyeu (30).

18. Agencement de grue (100) selon la revendication 1,
dans lequel un agencement de sécurisation est fourni pour sécuriser l'élément de grue (102) dans une position fixe par rapport au moyeu (30).

19. Agencement de grue (100) selon la revendication 18,
dans lequel un agencement de détection est fourni afin de surveiller la position fixe de l'élément de grue (102) par rapport au moyeu (30).
